Europäisches Patentamt

European Patent Office

Office européen des brevets

(19)

(11) Publication number: **0 225 470 B1**

(12) **EUROPEAN PATENT SPECIFICATION**

(45) Date of publication of patent specification: **09.09.92**   (51) Int. Cl.5: **G02F 1/133**, G02F 1/137

(21) Application number: **86115087.8**

(22) Date of filing: **30.10.86**

(54) Liquid crystal device and manufacturing method for same.

(30) Priority: **11.11.85 JP 252426/85**

(43) Date of publication of application:
**16.06.87 Bulletin 87/25**

(45) Publication of the grant of the patent:
**09.09.92 Bulletin 92/37**

(84) Designated Contracting States:
**DE FR GB**

(56) References cited:
**EP-A- 0 186 970**
**WO-A-85/02914**
**DE-A- 3 508 169**

**IBM TECHNICAL DISCLOSURE BULLETIN, vol. 16, no. 2, July 1973, pp 395-396, Armonk, N.Y., US**

**APPLIED PHYSICS LETTERS, vol. 36, no. 11, June 1,1980, pp 899-901, N.A. CLARK et al.: "Submicrosecond bistable electro-optic switching in liquid crystals".**

(73) Proprietor: **SEL SEMICONDUCTOR ENERGY LABORATORY CO., LTD.**
**398 Hase**
**Atsugi-shi Kanagawa-ken 243(JP)**

(72) Inventor: **Yamazaki, Shunpei**
**21-21, Kitakarasuyama 7-chome**
**Setagaya-ku Tokyo 157(JP)**
Inventor: **Konuma, Toshimitsu**
**Flat Atsugi 206, 931-1, Hase**
**Atsugi-Shi Kanagawa-ken, 243(JP)**
Inventor: **Hamatani, Toshiji**
**Flat Ochiai 201, 1144, Hase**
**Atsugi-Shi Kanagawa-ken, 243(JP)**
Inventor: **Mase, Akira**
**Terrace Hase 3-3, 381-1, Hase**
**Atsugi-Shi Kanagawa-ken, 243(JP)**
Inventor: **Yamaguchi, Toshiharu**
**Flat Meiwa 201, 2-4993-2, Sobudai**
**Zama-Shi Kanagawa-ken, 228(JP)**
Inventor: **Sakama, Mitsunori**
**1173, Kamiyoshizawa**
**Hiratsuka-Shi Kanagawa-ken, 259-12(JP)**
Inventor: **Inujima, Takashi**
**Terrace Hase 2-3, 381-1, Hase**
**Atsugi-Shi Kanagawa-ken, 243(JP)**

(74) Representative: **Patentanwälte Grünecker, Kinkeldey, Stockmair & Partner**
**Maximilianstrasse 58**
**W-8000 München 22(DE)**

## Description

### BACKGROUND OF THE INVENTION

The present invention relates to a liquid crystal device in accordance with the generic clause of Claim 1. Such a device is known from DE-A-3 508 169.

Liquid crystal devices such as compact displays having lightweight are broadly used in the fields of microcomputers, word processors, compact television systems, etc. For instance, the display operates best in the parallel nematic configuration, wherein the elongated axes of both the liquid crystal molecules and the light-absorbing dichroic dye molecules are aligned in one direction parallel to the wall of the display cell in the electrically unexcited state. In this condition, the molecules in cooperation with a polarizer absorb the majority of incident light, and render the background of the display, as well as any unactivated pixels, to a dark condition. The pixels are electrically excited to align the molecules perpendicular to the cell walls and achieve a less-absorbing state displaying a relatively bright area against the dark background. Thus, the pixels can be energized between bright and dark conditions.

Such liquid crystal displays are useful especially for a display of a large panel area which includes, for example, 200 x 400 pixels. As one of the liquid crystals available for the displays, a twisted nematic type has been used frequently. Liquid crystals of this type are not so susceptible to impurities such as alkali metals contained in opposed glass substrates, such as sodium, phosphorus or boron.

Recently, on the other hand, liquid crystals of a different type have been reported as promising materials for some liquid crystal appliances. For instance, the chiral smectic phase is coming to fruition in some fields. The smectic phase, however, imparts high viscosity to liquid crystal at a room temperature so that it is necessary to lower the viscosity by raising the temperature of the liquid crystal up to 120 to 150°C to charge the liquid crystal into the narrow space between opposed substrates. Because of this, the high temperature undesirably promotes diffusion of impurities such as sodium into the liquid crystal from a glass substrate contiguous to the liquid crystal. In the case of a passive device, both the opposed insides of the substrates are in contact with the liquid crystal, making the device degraded during prolonged use at a range between a room temperature and 50°C.

It is the object of the invention to provide a liquid crystal device having a high performance without contaminating the liquid crystal in the device, said device having a long lifetime, having a substantially uniform thickness of the liquid crystal layer, and being available at low cost.

This object is solved by a device having the features of Claim 1.

Preferred embodiments are disclosed in the dependent claims.

The suitable materials for the blocking layer are nitrides; for example, silicon nitride, aluminium nitride, boron nitride, magnesium nitride, tin nitride, antimony nitride, indium nitride or blended compositions thereof.

### BRIEF DESCRIPTION OF THE INVENTION

Figure 1 is a cross-section view showing a liquid crystal display for general explanation purposes.

Figure 2 is a cross-section view showing an embodiment of the invention.

### DETAILED DESCRIPTION OF THE PREFERRED EMBODIMENTS

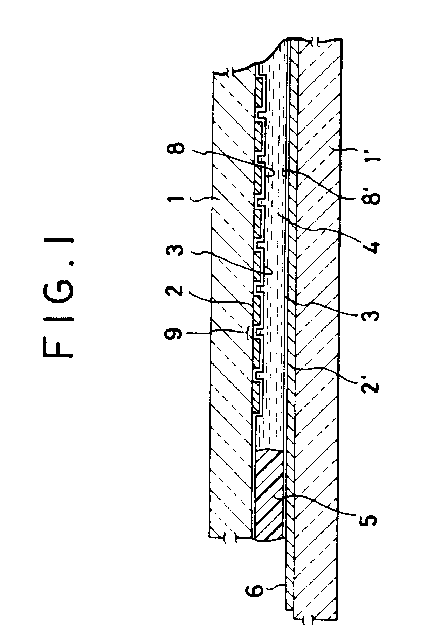

Referring to Figure 1, a liquid crystal display of a passive type is illustrated. The embodiment comprises opposed substrates 1 and 1' of glass panes such as Coning 7059 on whose insides are formed a plurality of electrode strips 2 arranged parallel with each other and a plurality of electrode strips 2' also arranged parallel with each other and extending perpendicular to the strips 2. The distance between the substrates 1 and 1' is 0.5 to 4 μm. A space is defined between the subtrates 1 and 1' in an airtight manner with a sealing means (not shown in the figure).

Between the electrode strips 2(2') and the substrate 1(1') or the liquid crystal layer 4 of smectic C phase disposed therebetween, color filters may be provided to make the device a color display, if desired. The contiguous surfaces to the liquid crystal are the inside surfaces of the electrode strips 2 and 2' and the inside surfaces 9 of the substrate 1 and 1' which are provided and exposed between adjacent ones of the electrode strips. Formed on the contiguous surfaces are silicon nitride films 8 and 8' with 2 to 200 nm, 20 nm in thickness, for example.

Liquid crystal material between the substrates 1 and 1' is a blend of ferroelectric liquid crystal such as S8 (P-ochtyloxybenzylidene P'-aminomethylebuthylbenzoate) and B8 (2-methylbuthy-4-ochtyloxybiphenylcarboxylate), DOBAMBC (2-dechtyloxybenzilidene-4-aminomethylbuthylcinnamate) or other liquid crystals and blends thereof. For reference, some ferroelectric liquid crystals are shown in Japanese Patent Laid Open Nos. 56-107216, 56-118745 and 59-98051.

The oriented surface can also be provided by mounting an additional oriented film over the silicon nitride film. In this case, the surfaces which are most contiguous to the liquid crystal are the oriented films instead of the silicon nitride films. Furthermore, as provided below, the silicon nitride may be disposed to a shadow treatment mask for black matrix, an active device, etc.

The charging process of the liquid crystal material is carried out according to either of the following two methods.

According to the first method, the substrates 1 and 1' are assembled in advance opposite to each other with the silicon nitride films 8 and 8'. The periphery of the assembly is sealed off by a sealing member 5 made of epoxy resin but leaving an injection aperture as an access. Next, the injection aperture is dipped into an amount of liquid crystal under negative pressure in a vacuum chamber and the liquid crystal is heated to 120 to 150°C. Then, the pressure in the chamber is returned to the atmospheric pressure. Due to the pressure difference between the atmosphere pressure and the pressure in the inside of the room between the opposed substrates, the liquid crystal enters into the cavity. Finally, the aperture is closed by the sealing material to prevent the liquid crystal from being contaminated by impurities in the atmosphere and from leakage.

Although it depends on the area of the display, it takes several hours to complete the filling process, normally 1 to 30 hours. The substrate and the liquid crystal material are in contact at the high temperature during the filling process. However, since the liquid crystal and the substrates, no impurities can enter into the liquid crystal from the substrates or the conductive transparent layer.

According to the second method, an amount of liquid crystal is placed on one of the substrates before assembling the substrates 1 and 1'. The substrate with the amount of liquid crystal is mated with the counterpart substrate under negative pressure in a vacuum chamber. Simultaneously, the substrate is heated to 120 to 150°C. Finally, the periphery of the substrates is sealed off with the sealing means.

During the charging step, the liquid crystal has a low viscosity by virtue of the high temperature, and the desired characteristics of the liquid crystal for operation of the device is recovered at room temperature. For instance, the liquid crystal assumes an isotropic state having low viscosity at a high temperature during "the filling step and a smectic phase having high viscosity at room temperature.

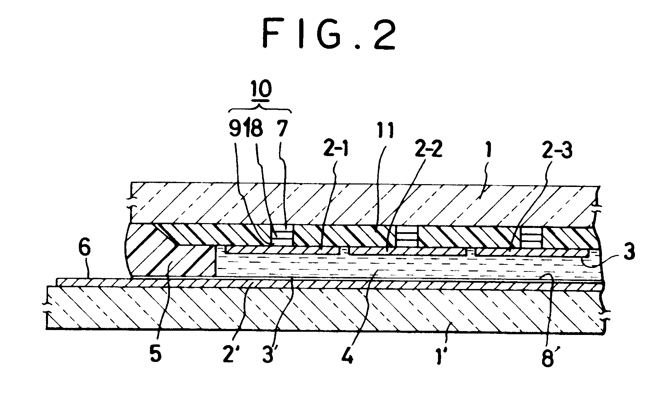

Next, an embodiment of the invention will be described in conjunction with Figure 2. Formed on a substrate 1 is a plurality of nonlinear active elements, each being composed of electrodes 7 and 9 made of chromium and a semiconductor layer 18 having n-i-n junctions therebetween. Further formed on the substrate 1 is a polyimide resin layer 11 adjacent to the nonlinear elements 10. The polyimide resin is immune to ion drift. Transparent electrodes 2-1, 2-2, etc., are formed on the resin layer 11 corresponding to each active element. A liquid crystal device of this type is shown in Japanese Patent Application No. 59-277414 (JP-A-61-151 615) applied by the applicant.

On the other substrate 1' are electrode strips 2' having terminal ends for making contacts with circumferential circuitry and silicon nitride films 8' as blocking layers with 20 nm in thickness. The liquid crystals to be charged into the space between the opposed substrates, and the charging methods thereof, are the same as those of the foregoing embodiment so that redundant explanations will not be repeated. According to experiments, liquid crystal devices of the invention did not show any degraded properties after the device had been used for 1000 hours.

On one side or both sides of the liquid crystal layer, a polarizing plate may be placed with the liquid crystal being of a guest-host type or birefringent type. In the case of a reflection type device, an electrode on the incident side is made transparent and the other electrode is made reflective with only one polarizer provided. The liquid crystal layer can be of a guest-host type with an additive, for example, 3% of dye or pigment, such as dichroic anthraquinone. A high contrast will be seen when the tilted angle of liquid crystal is 45 degrees.

On the other hand, in the case of a device of a transmissive type or reflective type with a birefringent liquid crystal layer, a pair of polarizers is placed on both of the outsides of the opposed substrates. In this case, a desirable tilted angle is about 22.5 degrees.

While the invention has been particularly shown and described with reference to the preferred embodiments thereof, it will be understood by those skilled in the art that the foregoing, and other modifications and changes in form and details, may be made therein without departing from the scope of the appending claims. Some examples are disclosed in the following.

As the substrates are to have an amount of liquid crystal therebetween, a pair of flexible sheets may be employed; for instance, chemically strengthened thin glass substrates with 0.3 to 0.6 mm in thickness and transparent heat-proof organic resin films are made of polyimide, PAN and PET and the like.

Active elements may be SCLAD (Space Charge Limited Amorphous Silicon Device) having a multi-junction diode such as a n-i-n type diode or FETs of an insulated gate type.

The invention may be applied to other liquid crystal appliances, for example disc memories, speakers, infrared light sensor printers, or input devices in which a plurality of photo sensors arranged in the form of dots are formed.

## Claims

1. A liquid crystal device comprising:
   a pair of substrates (1,1');
   a first electrode structure (2') disposed on the inner surface of one (1') of said substrates and being covered by an ion drift blocking layer (8');
   a liquid crystal layer (4) disposed between said substrates; and
   a second electrode structure (2-1, 2-2, 2-3); characterized by
   a plurality of nonlinear active elements (10) disposed on the inner surface of the other (1) of said substrates; and
   an ion drift blocking resin layer (11) of the same thickness as said nonlinear active elements and being disposed between adjacent nonlinear active elements, said resin layer (11) and said nonlinear active elements (10) supporting said second electrode structure.

2. The liquid crystal device of Claim 1 **characterized in that**
   said nonlinear active elements (10) are semiconductor devices.

3. The liquid crystal device of Claim 1 **characterized in that**
   each of said nonlinear active elements (10) is composed of a semiconductor layer (18) having a nin junction.

4. The liquid crystal device of Claim 1 **characterized in that**
   said liquid crystal layer (4) comprises a ferroelectric liquid crystal material.

5. The liquid crystal device of Claim 1 **characterized in that**
   said resin layer (11) comprises a polyimide resin.

## Patentansprüche

1. Flüssigkristallvorrichtung umfassend:
   ein Trägerpaar (1, 1');
   eine erste Elektrodenstruktur (2'), die auf der Innenfläche eines Trägers (1') angeordnet und von einen Ionenwanderungsblockierschicht (8') abgedeckt ist;
eine Flüssigkeitskristallschicht (4), die zwischen den Trägern angeordnet ist und eine zweite Elektrodenstruktur (2-1, 2-2, 2-3) **gekennzeichnet** durch
eine Vielzahl von nichtlinearen aktiven Elementen (10), die auf der Innenfläche des anderen (1) Trägers angeordnet ist und durch eine Ionenwanderungsblockierkunststoffschicht (11) mit derselben Dicke wie die nichtlinearen aktiven Elemente, die zwischen benachbarten nichtlinearen aktiven Elementen angeordnet ist, wobei die Kunststoffschicht (11) und die nichtlinearen aktiven Elemente (10) die zweite Elektrodenstruktur tragen.

2. Flüssigkristallvorrichtung nach Anspruch 1, dadurch **gekennzeichnet,**
   daß die nichtlinearen aktiven Elemente (10) Halbleiterelemente sind.

3. Flüssigkristallvorrichtung nach Anspruch 1, dadurch **gekennzeichnet,**
   daß jedes nichtlineare Element (10) aus einer halbleitenden Schicht mit nin-Verbindung zusammengesetzt ist.

4. Flüssigkristallvorrichtung nach Anspruch 1, dadurch **gekennzeichnet,**
   daß die Flüssigkristallschicht (4) ein ferroelektrisches Flüssigkristallmaterial umfaßt.

5. Flüssigkristallvorrichtung nach Anspruch 1, dadurch **gekennzeichnet,**
   daß die Kunststoffschicht (11) Polyimidkunststoff umfaßt.

## Revendications

1. Un dispositif à cristaux liquides comprenant:
   une paire de substrats (1, 1');
   une première structure d'électrodes (2') disposée sur la surface intérieure de l'un (1') desdits substrats et recouverte d'une couche de blocage du mouvement d'ions (8');
   une couche de cristaux liquides (4) disposée entre lesdits substrats; et
   une seconde structure d'élecrodes (2-1), 2-2, 2-3);
   caractérisé par
   une pluralité d'éléments actifs non-linéaires (10) disposés sur la surface intérieure de l'autre (1) desdits substrats; et
   une couche de résine de blocage du mouvement d'ions (11) de la même épaisseur que lesdits éléments actifs non-linéaires et disposée entre des éléments actifs non-linéaires adjacents, ladite couche de résine (11) et lesdits éléments actifs non-linéaires (10) supportant ladite seconde structure d'élecrodes.

2. Le dispositif à cristaux liquides suivant la revendication 1, caractérisé en ce que lesdits éléments actifs non-linéaires (10) sont des dispositifs semi-conducteurs.

3. Le dispositif à cristaux liquides suivant la revendication 1, caractérisé en ce que chacun desdits éléments actifs non-linéaires (10) se compose d'une couche semi-conductrice (18) présentant une jonction n-i-n.

4. Le dispositif à cristaux liquides suivant la revendication 1, caractérisé en ce que ladite couche de cristaux liquides (4) comprend un matériau de cristal liquide ferroélectrique.

5. Le dispositif à cristaux liquides suivant la revendication 1, caractérisé en ce que ladite couche de résine (11) comprend une résine polyimidique.

# FIG. 1

FIG.2